# EUROPEAN PATENT SPECIFICATION

(11) **EP 4 581 083 B1**
(45) Date of publication and mention of the grant of the patent: **12.08.2026**
(21) Application number: 22797254.4
(22) Date of filing: 28.09.2022
(51) Int. Cl.: C08L 83/06, C08G 77/18

(54) **SEALANT COMPOSITION**
DICHTUNGSMITTELZUSAMMENSETZUNG
COMPOSITION DE PRODUIT D'ÉTANCHÉITÉ

(43) Date of publication of application: 09.07.2025
(73) Proprietor: Dow Silicones Corporation, Midland, Michigan 48686 (US)
(72) Inventor: ZENG, Zhiping, Shanghai 201203 (CN); GUO, Yi, Shanghai 201203 (CN); WEI, Xing, Shanghai 201203 (CN); WANG, Xiuyan, Shanghai 201203 (CN); PENG, Jiang, Shanghai 201203 (CN)
(74) Representative: Elkington and Fife LLP
(86) International application number: PCT/CN2022/122217
(87) International publication number: WO 2024/065299

(56) References cited:
- WO-A1-2020/263763
- US-B2- 8 580 073

## Description

This relates to a one-part condensation curable silicone sealant composition suitable for use as a construction sealant for silicone structural glazing (SSG) applications, in particular for use in curtain wall façade systems.

A building façade is a predominantly vertical outer face of a building. Whilst this may be an external wall built using traditional materials such as bricks, stone and concrete, medium to high rise buildings increasingly utilise curtain wall systems.

A curtain wall is an outer face of a building which does not carry load from the building other than its own weight (often referred to as its dead load), i.e., it is an outer covering of a building façade which is non-structural and therefore can be made of materials, such as glass, which is favoured by architects, as it enables natural light to enter the building. Such curtain walls are designed to resist air and water infiltration and withstand wind loads (which can be extremely high dependent on the design, height, and location of the building) in order to minimise swaying by laterally transferring wind loads to the main supporting building structure.

Curtain walls may be designed as "systems" comprising a frame, e.g., steel or aluminium frames, panels e.g., glass panels, and weather sealing materials. However, steel frames have largely given way to aluminium extrusions, typically infilled with glass panels, including if desired operable windows or vents and shadow boxes. The glass panels or infills (hereafter referred to as panels) may contain a single pane of glass, laminated glass, double glazed insulating glass units (IGUs) or triple glazed IGUs. The frame/support may contain horizontal aluminium transoms and/or vertical aluminium mullions. However, Silicone structural glazing (SSG) systems are becoming increasingly preferred wherein frames are kept to a minimum and are often not required.

SSG is a curtain wall arrangement utilizing a silicone adhesive/sealant to adhere glass, metal, or other panel materials to the structure of a building allowing an almost unbroken external façade whilst redistributing loads to the facade structure via the structural adhesive/sealant. This enables facades to be designed with a frameless appearance without needing to include bulky frames and joints that detract from the aesthetic appearance of the façade but may involve the use of a structural sealant-support frame if desired or required. Increasingly such systems rely on silicone materials to function as the weather sealing materials and also as the adhesive sealant adhering the panels, especially glass panels to the building structure. For SSG facades then the performance of the silicone adhesive/sealant used to adhere the panels to the building structure is critical.

The silicone sealants chosen for use in SSG systems are selected due to their physical properties for example,
(i) excellent resistance to ultraviolet rays and atmospheric aging;
(ii) long term (30 years or more) durability without substantial cracking, brittleness and/or deterioration in harsh environments such as sunlight, rain, snow and seasonal climate changes;
(iii) stability and flexibility over a wide temperature range e.g., from - 40 C to +150 C;
(iv) features such as 50% displacement capacity.

Because the SSG process is a physical and structural bond between the glass and carrier, it can be used very effectively to increase the strength of a glass or glass and metal assembly. This can be assisted by the utilisation of glass fins or struts as an additional means of supporting the glass curtain that is structural glazing.

Generally, the silicone sealants used as structural sealants are designed to be room temperature vulcanizable (RTV), where room temperature is from about 20°C to 25°C. They usually comprise **an -OH** end-blocked diorganopolysiloxane polymer or an alkoxy end-blocked polydiorganosiloxane which may have an alkylene link between the terminal and penultimate silicon atoms as well as one or more suitable cross-linking agents designed to react with the -OH and/or alkoxy groups and thereby cross-link the composition to form an e.g., elastomeric sealant product and one or more condensation cure catalysts. Additional ingredients such as reinforcing fillers, non-reinforcing fillers, adhesion promotors, chain extenders, flame retardants, plasticisers and/or extenders, solvent resistant additives, biocides and the like are often also incorporated into these compositions as and when required.

They may be one-part compositions or multiple-part, e.g., two-part compositions. One-part condensation curing (RTV) silicone compositions are generally utilised to generate skin or diffusion cured silicone elastomers. It is well known to people skilled in the art that alkoxy titanium compounds and /or alkoxy zirconium compounds i.e., alkyl titanates- are suitable catalysts for curing such one component moisture curable silicones. One-part condensation curing silicone compositions are generally designed not to contain any water/moisture in the composition so far as possible, i.e., they are generally stored in a substantially anhydrous form to prevent premature cure during storage before use. Skin or diffusion cure (e.g., moisture/condensation) takes place by the formation of a cured skin at the composition/air interface subsequent to the sealant/encapsulant being applied on to a substrate surface. Subsequent to the generation of the surface skin the cure speed is dependent on the speed of diffusion of moisture from the sealant/encapsulant interface with air to the inside (or core) of the layer of silicone composition applied, and the diffusion of condensation reaction by-product/effluent from the inside (or core) to the outside (or surface) of the material and the gradual thickening of the cured skin over time from the outside/surface to the inside/core. Such one-part condensation curing silicone compositions are applied in a layer that is thinner than typically 15 mm. Such compositions, if applied in layers thicker than 15 mm, are known to lead to uncured material in the depth of the material, because moisture is very slow to diffuse into very deep sections. The main, if not sole source, of moisture in these compositions are inorganic fillers, e.g., silica or calcium carbonate when present. Said fillers may be rendered anhydrous before inter-mixing with other ingredients or water/moisture may be extracted from the mixture during the mixing process to ensure that the resulting sealant composition is substantially anhydrous.

Silicone sealant compositions having at least one Si-alkoxy bond, e.g., Si-methoxy bond in the terminal reactive silyl group and having a polydiorganosiloxane polymeric backbone are widely used for sealants in the construction industry because they have good adhesion, and weather resistance, and the like. The construction industry also prefers one-component compositions to negate the need for mixing ingredients before application and compositions with excellent workability.

As indicated above, it is very important for the structural sealants used in SSG facades to maintain adhesive integrity to be stable even under the extreme climate, such as the high temperatures (greater than (>) 75°C). So, structural silicone sealants must have high temperature durability to maintain adhesive integrity as the façade is subjected to the combined stresses at said high environmental temperatures or greater in particular to meet necessary international standards for structural sealants used in SSG systems such as European Standard EOTA-ETAG 002 of November 2005 which requires structural sealants to maintain a high tension strength retention rate and shear strength retention rate at 80°C while maintaining a high tear strength retention rate of above 75% at room temperature. However, this is difficult to achieve because whilst the tension retention rate and shear strength retention rate at 80°C can both be improved by increasing the crosslinking density of a sealant elastomer the increase in cross-link density generally has the opposite effect in respect of the tear strength retention rate i.e., the tear strength retention rate tends to decrease as the cross-link density increases.

US 8 580 073 relates to a hot melt adhesive composition which can be used to laminate substrates together in construction industry and industrial maintenance and assembly applications.

WO 2020/263763 relates to a low modulus room temperature vulcanisable (RTV) silicone composition which cures to a low modulus silicone elastomer which may be used as a coating, adhesive or a sealant having high movement capability.

There is provided herein a one-part RTV condensation curable silicone composition comprising the following components:
(a) an organopolysiloxane polymer of the formula

   X₃₋ₙRₙSi-Z- (R¹_{y}SiO_{(4-y)/2})_{z}-SiR¹₂ -Z-Si-RₙX₃₋ₙ (1)

   in which each X is independently an alkoxy group, each R is an alkyl, alkenyl or aryl group, each R¹ is an X group, alkyl group, alkenyl group or aryl group and Z is a divalent organic group;
   n is 0 or 1, y is 0, 1 or 2, preferably 2 and z is an integer such that said organopolysiloxane polymer has a viscosity of from 10,000 to 150,000 mPa.s at 25°C, in an amount of from 30 to 80 weight % (wt. %) of the composition;
(b) an alkoxylated MQ silicone resin optionally in the presence of a polysiloxane carrier fluid having a molar ratio of M units to Q units of from 0.1: 1.0 to 1.0 to 1.0; wherein each Q type siloxane unit has the structure SiO_{4/2} and the M type siloxane units either have the structure R²₂ R⁸SiO_{1/2}- or are present in the form of a mixture of R²₂ R⁸SiO_{1/2}- and R²₃SiO_{1/2}- groups;
   where each R² group is an alkyl group having from 1 to 6 carbons; and R⁸ is an alkenyl group having from 2 to 6 carbons; or R⁸ is an X₃₋ₙRₙSi-Z- group with X, R, Z and n are all as previously defined; wherein at least 50% of the R⁸ groups are silicon bonded X₃₋ₙRₙSi-Z- groups;
   which component (b) is present in the composition in an amount of from 7.5 to 25 wt. %;
(c) one or more cross-linkers in the form of a silicon containing compound having at least two, alternatively or at least three hydrolysable groups per molecule;
(d) one or more reinforcing fillers selected from precipitated silica, fumed silica or precipitated calcium carbonate which reinforcing fillers are optionally hydrophobically treated;
(e) one or more silicon-containing adhesion promoters;
(f) one or more condensation curing catalysts selected from a catalyst comprising a titanate-based compound, a zirconate-based compound or a mixture thereof; and optionally
(g) one or more non-reinforcing fillers which non-reinforcing fillers may be hydrophobically treated. It is to be appreciated that the total wt. % of the composition is 100 wt. %.

There is also provided herein an elastomeric sealant material which is the cured product of the composition as herein described.

Unexpectedly, the elastomeric material derived from curing the composition herein is able to maintain a high tear strength retention rate, such as above 75% at room temperature as well as meeting the required high tension strength retention rate and shear strength retention rate (greater than 75%) at 80°C. This was surprisingly achieved when component (b) as herein described was introduced resulting in the tear strength retention rate was maintained above 75% at room temperature indicating that a composition as defined above, upon cure would satisfy the requirements of EOTA-ETAG 002 of November 2005.

There is also provided an elastomeric sealant material obtained or obtainable by
(i) mixing together a one-part RTV condensation curable silicone composition comprising the following components:
   (a) an organopolysiloxane polymer of the formula

      X₃₋ₙRₙSi-Z- (R¹_{y}SiO(_{4-y)/2})_{z}-SIR¹₂--Z-Si-RₙX₃₋ₙ (1)

      in which each X is independently an alkoxy group, each R is an alkyl, alkenyl or aryl group, each R¹ is an X group, alkyl group, alkenyl group or aryl group and Z is a divalent organic group;
      n is 0 or 1, y is 0, 1 or 2, preferably 2 and z is an integer such that said organopolysiloxane polymer has a viscosity of from 10,000 to 150,000 mPa.s at 25°C, in an amount of from 30 to 80 weight % (wt. %) of the composition;
   (b) an alkoxylated MQ silicone resin optionally in the presence of a polysiloxane carrier fluid an alkoxylated MQ silicone resin optionally in the presence of a polysiloxane carrier fluid having a molar ratio of M units to Q units of from 0.1: 1.0 to 1.0 to 1.0; wherein each Q type siloxane unit has the structure SiO_{4/2} and the M type siloxane units either have the structure R²₂ R⁸SiO_{1/2}- or are present in the form of a mixture of R²₂ R⁸SiO_{1/2}- and R²□SiO_{1/2}- groups;
      where each R² group is an alkyl group having from 1 to 6 carbons; and R⁸ is an alkenyl group having from 2 to 6 carbons; or R⁸ is an X₃₋ₙRₙSi-Z- group with X, R, Z and n are all as previously defined; wherein at least 50% of the R⁸ groups are silicon bonded X₃₋ₙRₙSi-Z- groups;
      which component (b) is present in the composition in an amount of from 7.5 to 25 wt. %;
   (c) one or more cross-linkers in the form of a silicon containing compound having at least two, alternatively or at least three hydrolysable groups per molecule;
   (d) one or more reinforcing fillers selected from precipitated silica, fumed silica or precipitated calcium carbonate which reinforcing fillers are optionally hydrophobically treated;
   (e) one or more silicon-containing adhesion promoters;
   (f) one or more condensation curing catalysts selected from a catalyst comprising a titanate-based compound, a zirconate-based compound or a mixture thereof; and optionally
   (g) one or more non-reinforcing fillers which non-reinforcing fillers may be hydrophobically treated; and
(ii) curing the said composition.

There is also provided a method of making an elastomeric sealant material by
(i) mixing together components (a) to (g) and any required additives of a one-part RTV condensation curable silicone composition as hereinbefore described; and
(ii) curing the said composition.

There is also provided a use of one-part RTV condensation curable silicone composition comprising the following components:
(a) an organopolysiloxane polymer of the formula

   X₃₋ₙRₙSi-Z- (R¹_{y}SiO_{(4-y)/2})_{z}-SIR¹₂ -Z-Si-RₙX₃₋ₙ (1)

   in which each X is independently an alkoxy group, each R is an alkyl, alkenyl or aryl group, each R¹ is an X group, alkyl group, alkenyl group or aryl group and Z is a divalent organic group;
   n is 0 or 1, y is 0, 1 or 2, preferably 2 and z is an integer such that said organopolysiloxane polymer has a viscosity of from 10,000 to 150,000 mPa.s at 25°C, in an amount of from 30 to 80 weight % (wt. %) of the composition;
(b) an alkoxylated MQ silicone resin optionally in the presence of a polysiloxane carrier fluid an alkoxylated MQ silicone resin optionally in the presence of a polysiloxane carrier fluid having a molar ratio of M units to Q units of from 0.1: 1.0 to 1.0 to 1.0; wherein each Q type siloxane unit has the structure SiO_{4/2} and the M type siloxane units either have the structure R²₂ R⁸SiO_{1/2}- or are present in the form of a mixture of R²₂ R⁸SiO_{1/2}- and R²□SiO_{1/2}- groups;
   where each R² group is an alkyl group having from 1 to 6 carbons; and R⁸ is an alkenyl group having from 2 to 6 carbons; or R⁸ is an X₃₋ₙRₙSi-Z- group with X, R, Z and n are all as previously defined; wherein at least 50% of the R⁸ groups are silicon bonded X₃₋ₙRₙSi-Z- groups;
   which component (b) is present in the composition in an amount of from 7.5 to 25 wt. %;
(c) one or more cross-linkers in the form of a silicon containing compound having at least two, alternatively or at least three hydrolysable groups per molecule;
(d) one or more reinforcing fillers selected from precipitated silica, fumed silica or precipitated calcium carbonate which reinforcing fillers are optionally hydrophobically treated;
(e) one or more silicon-containing adhesion promoters;
(f) one or more condensation curing catalysts selected from a catalyst comprising a titanate-based compound, a zirconate-based compound or a mixture thereof; and optionally
(g) one or more non-reinforcing fillers which non-reinforcing fillers may be hydrophobically treated;
in the preparation of an elastomeric sealant material which provides a tension strength retention rate, and shear strength retention rate of greater than 75% at 80°C measured in accordance with 6.1.4.1.2 of EOTA-ETAG 002 of November 2005 whilst maintaining a tear strength retention rate of above 75% at room temperature measured in accordance with 6.1.4.6.4 of EOTA-ETAG 002 of November 2005.

Such an elastomeric sealant material consequently meets the requirement of EOTA-ETAG 002 of November 2005.

There is also provided a use of the aforementioned composition as a sealant in the facade, insulated glass, window construction, automotive, solar and construction fields.

The concept of "comprising" where used herein is used in its widest sense to mean and to encompass the notions of "include" and "consist of".

For the purpose of this application "substituted" means one or more hydrogen atoms in a hydrocarbon group has been replaced with another substituent. Examples of such substituents include, but are not limited to, halogen atoms such as chlorine, fluorine, bromine, and iodine; halogen atom containing groups such as chloromethyl, perfluorobutyl, trifluoroethyl, and nonafluorohexyl; oxygen atoms; oxygen atom containing groups such as (meth)acrylic and carboxyl; nitrogen atoms; nitrogen atom containing groups such as amino-functional groups, amido-functional groups, and cyano-functional groups; sulphur atoms; and sulphur atom containing groups such as mercapto groups.

The said one-part RTV condensation curable silicone composition is brought into contact with a targeted substrate by any conventional means such as by extrusion, coating, injection, knifing and rolling. The one-part RTV condensation curable silicone composition is particularly intended to be used as a one-part adhesive sealant for silicone sealant glazing, avoiding the need to mix two or more parts of the composition on site before application onto a target substrate. After said one-part RTV condensation curable silicone composition is applied to the target substrate, it is exposed to atmospheric moisture causing it to skin or diffusion cure by the formation of a cured skin at the composition/air interface subsequent to the sealant/encapsulant being applied on to a substrate surface. Subsequent to the generation of the surface skin the cure speed is dependent on the speed of diffusion of moisture from the sealant/encapsulant interface with air to the inside (or core) of the layer of silicone composition applied, and the diffusion of condensation reaction by-product/effluent from the inside (or core) to the outside (or surface) of the material and the gradual thickening of the cured skin over time from the outside/surface to the inside/core.

Such an elastomeric sealant material meets the requirement of EOTA-ETAG 002 of November 2005 and as a consequence should assure the user that it can maintain its adhesive integrity under the extreme climate conditions, e.g., when the façade is subjected to stresses such as wind load at said high environmental temperatures.

The components of the composition will now be described in more detail.

### Organopolysiloxane polymer having at least two hydroxyl or hydrolysable groups per molecule (a)

The organopolysiloxane polymer having at least two hydroxyl or hydrolysable groups per molecule
(a) has the following formula

X₃₋ₙRₙSi-Z- (R¹_{y}SiO_{(4-y)/2})_{z}-SiR¹₂ -Z-Si-RₙX₃₋ₙ (1)

In the above formula each X is independently a hydroxyl group or an alkoxy group, alternatively an alkoxy group. Preferably said alkoxy group has between 1 and 10 carbons. Illustrative alkoxy groups are methoxy, ethoxy, propoxy, isopropoxy, n-butoxy, t-butoxy, isobutoxy, pentoxy, hexoxy and 2-ethylhexoxy; dialkoxy groups, such as methoxymethoxy or ethoxymethoxy and alkoxyaryloxy, such as ethoxyphenoxy groups; alternatively, each X is an alkoxy group having from one and six carbons, alternatively having from one and four carbons or alternatively is a methoxy or ethoxy group. Each R group is an alkyl, alkenyl or aryl group, alternatively each R is an alkyl group having from 1 to 6 carbons, an alkenyl group having from 2 to 6 carbons such as vinyl, allyl and hexenyl groups or an aryl group having from 6 to 12 carbons; alternatively each R is an alkyl group having from 1 to 6 carbons, or an aryl group having from 6 to 12 carbons; alternatively each R is an alkyl group having from 1 to 6 carbons, alternatively each R is an ethyl group or a methyl group.

In one embodiment R may include substituted aliphatic organic groups such as 3,3,3-trifluoropropyl groups aminoalkyl groups, polyaminoalkyl groups, and/or epoxyalkyl groups.

Each R¹ is an X group, or and R group, with the proviso that cumulatively at least two X groups and/or R¹ groups per molecule are hydroxyl or hydrolysable groups. Alternatively, each R' is an R group. It is possible that some R¹ groups may be siloxane branches off the polymer backbone which branches may have terminal groups as hereinbefore described.

Each Z is a divalent organic group, typically an alkylene having from 2 to 10 carbons, such as for example, an ethylene, propylene, butylene, pentylene and/or hexylene group; alternatively, an alkylene group having 2 to 6 carbons, alternatively an alkylene group having from 2 to 5 carbons. Subscript n is zero or 1, alternatively is zero; each subscript y is 0, 1 or 2, and preferably 2. In one embodiment each n is zero and each Z is an alkylene having from 2 to 10 carbons.

Whilst y is 0, 1 or 2, substantially y= 2, e.g., at least 90%, alternatively 95% of R¹_{y}SiO_{(4-y)/2} groups are characterized with y = 2. Subscript z is an integer such that said organopolysiloxane polymer has a viscosity of from 10,000 to 150,000 mPa.s, alternatively from 30,000 to 140,000mPa.s at 25°C, therefore z is an integer of from approximately 300 to 2000. The viscosity of component (a) may be measured at 25°C in accordance with the ASTM D4287 Cone and Plate Method using a Brookfield DV-III Ultra Rheometer.

Component (a) is present in the one-part RTV condensation curable silicone composition in an amount of from 30 to 90 wt. % of the composition, alternatively 35 to 75%, alternatively 35 to 60 wt. % of the composition.

Organopolysiloxane polymer (a) can be a single siloxane represented by Formula (1) or it can be mixtures of organopolysiloxane polymers represented by the aforesaid formula. Hence, it may be a "siloxane polymer mixture" so organopolysiloxane polymer (a) is meant to include any individual organopolysiloxane polymer (a) or mixtures of organopolysiloxane polymer (a).

The Degree of Polymerization (DP), (i.e., in the above formula substantially z), is usually defined as the number of monomeric units in a macromolecule or polymer or oligomer molecule of silicone. Synthetic polymers invariably consist of a mixture of macromolecular species with different degrees of polymerization and therefore of different molecular weights. There are different types of average polymer molecular weight, which can be measured in different experiments. The two most important are the number average molecular weight (Mn) and the weight average molecular weight (Mw). The Mn and Mw of a silicone polymer can be determined by gel permeation chromatography (GPC) with precision of about 10-15% using polystyrene standards.

This technique is standard and yields Mw, Mn and polydispersity index (PI). The degree of polymerisation (DP) =Mn/Mu where Mn is the number-average molecular weight coming from the GPC measurement and Mu is the molecular weight of a monomer unit. PI=Mw/Mn. The DP is linked to the viscosity of the polymer via Mw, the higher the DP, the higher the viscosity. In the present disclosure the number average molecular weight and weight average molecular weight values of component (a) herein may, for example, be determined using a Waters 2695 Separations Module equipped with a vacuum degasser, and a Waters 2414 refractive index detector (Waters Corporation of MA, USA). The analyses may then be performed using certified grade toluene flowing at 1.0 mL/min as the eluent. Data collection and analyses may be performed using Waters Empower GPC software.

### Alkoxylated MQ resin (b)

The alkoxylated MQ silicone resin of component (b) is an MQ silicone resin having a molar ratio of M units to Q units of from 0.1: 1.0 to 1.0 to 1.0; wherein each Q type siloxane unit has the structure SiO_{4/2} and the M type siloxane units either have the structure R²₂ R⁸SiO_{1/2}- or are present in the form of a mixture of R²₂ R³SiO_{1/2}- and R²□SiO_{1/2}- groups;
where each R² group is an alkyl group having from 1 to 6 carbons, alternatively 1 to 3 carbons, alternatively is a methyl group or an ethyl group; and R⁸ is an alkenyl group having from 2 to 6 carbons, alternatively 2 to 4 carbons, alternatively a vinyl group or a propenyl group; or R⁸ is an X₃₋ₙRₙSi-Z- group with X, R, Z and n are all as previously defined; wherein at least 50% of the R⁸ groups are silicon bonded X₃₋ₙRₙSi-Z- groups (with the Si-H and Si-Vi contents being determined by FTIR in accordance with corporate test method CTM1092 of Dow Silicones Corporation which is available to the public upon request). In one embodiment each n is zero and each Z is an alkylene having from 2 to 10 carbons.

It will consequently be appreciated that such X₃₋ₙRₙSi-Z- groups are reactive with both component (a) the organopolysiloxane polymer and component (c) the cross-linker and potentially with component (e) the adhesion promoter. It is possible that the resin may also contain low levels of D type siloxane units = (R³R⁴SiO_{2/2}) and T type siloxane units = (R⁵SiO_{3/2}) by low level we mean in each case less than 1 wt. % of the MQ resin are D groups and T groups. Typically, the R³, R⁴ and R⁵ groups are alkyl or alkenyl groups. By "alkoxylated" it is meant that the M units of the MQ resin must contain alkoxy groups, typically alkoxy groups having from 1 to 6 carbons.

Component (b) the alkoxylated MQ silicone resin optionally in the presence of a polysiloxane carrier fluid may be introduced into the composition in isolation i.e. in a "neat" form or may be provided in the presence of a polysiloxane carrier liquid, in particular a linear or branched polydimethylsiloxane with X₃₋ₙRₙSi-Z- terminal groups. In one embodiment the polysiloxane carrier fluid is component (a). When provided in a polysiloxane carrier liquid there is from 20 wt. % to 75 wt. % of alkoxylated MQ resin with the remainder being the polysiloxane carrier liquid. Component (b) is present in the composition in an amount of from 7.5 to 25 wt. %, alternatively in an amount of from 7.5 to 22.5 wt. %.

When preparing examples it had been originally hoped that given the introduction of component (b) into the composition unexpectedly was able to keep the tear strength retention rate sufficiently high (> 75%) at room temperature when increasing the tension strength retention rate and shear strength retention rate (greater than 75%) at 80°C by increasing the elastomers cross-link density the use of branched polymers such as the following would have a similar effect but as will be seen in the examples which follow this surprisingly failed to be the case. The branched polymers in question were of the formula

[R^{A}_{d} R^{B}_{3-d} Si-(O-Si R¹⁴₂)ₓ-O]₄ Si

would also be likely to provide working examples where each R^{A} was X₃₋ₙRₙSi-Z- group as hereinbefore defined, each R^{B} was an alkenyl group having from 2 to 8 carbons, typically vinyl, allyl, and hexenyl and each R¹⁴ is phenyl or an alkyl group having from 1 to 6 carbons, typically methyl and/or ethyl and subscripts v, w, and x have values such that 200 ≥ v ≥ 1, 2 ≥ w ≥ 0, and 200 ≥ x ≥ 1 with d being from 0 to 3 but there being at least 50% of the total number of R^{A} and R^{B} groups being R^{A} groups. Such a polymer may be used as the polysiloxane carrier liquid for the alkoxylated MQ resin of component (b), if desired.

### One or more cross-linkers in the form of a silicon containing compound having at least two, alternatively or at least three hydrolysable groups per molecule (c)

Component (c) is one or more cross-linkers in the form of a silicon containing compound having at least two or at least three hydrolysable groups per molecule; the cross-linker may be for example be one or more cross-linkers comprising a silicon containing compound of the formula R⁹_{4-f}SiX'_{f} and oligomeric reaction products thereof. R⁹ is selected from the group consisting of hydrocarbon radicals having 1 to 6 carbon atoms. X' in the above formula is a hydrolyzable group. The hydrolysable groups X' may be acyloxy groups (for example, acetoxy, octanoyloxy, and benzoyloxy groups); ketoximino groups (for example dimethyl ketoximo, and isobutylketoximino); alkoxy groups (for example methoxy, ethoxy, iso-butoxy and propoxy) and alkenyloxy groups (for example isopropenyloxy and 1-ethyl-2-methylvinyloxy). Alternatively, each hydrolyzable group X' is an alkoxy group having 1 to 6 carbon atoms.

Subscript f is 2, 3 or 4, preferably 3 or 4. Typically subscript f is only 2 when component (a) comprises at least three X' groups per molecule. Hence, the cross-linker preferably has at least three or four hydroxyl and/or hydrolysable groups per molecule which are reactive with the hydroxyl and/or hydrolysable groups in organopolysiloxane (a).

When the silane has a total of three X' silicon-bonded hydroxyl and/or hydrolysable groups per molecule, the fourth group (R⁹) is suitably a non-hydrolysable silicon-bonded organic group. These silicon-bonded organic groups (R⁹) are suitably hydrocarbyl groups which are optionally substituted by halogen such as fluorine and chlorine. Examples of such fourth groups (R⁹) include alkyl groups (for example methyl, ethyl, propyl, and butyl); cycloalkyl groups (for example cyclopentyl and cyclohexyl); alkenyl groups (for example vinyl and allyl); aryl groups (for example phenyl, and tolyl); aralkyl groups (for example 2-phenylethyl) and groups obtained by replacing all or part of the hydrogen in the preceding organic groups with halogen. Preferably however, the fourth silicon-bonded organic group(R⁹) is an alkyl group having one to six carbons e.g., methyl or an alkenyl group having from 2 to 6 carbons e.g., vinyl such that the preferred silanes which can be used as cross-linkers include alkyltrialkoxysilanes alkenyltrialkoxy silanes as well as tetra-alkoxy silanes.

However, a wide variety of silane cross-linkers may be utilised. These include methyltrimethoxysilane (MTM) and methyltriethoxysilane, vinyltrimethoxysilane and vinyltriethoxysilane, isobutyltrimethoxysilane (iBTM) ethyltrimethoxysilane, phenyltrimethoxysilane, alkoxytrioximosilane, alkenyltrioximosilane, 3,3,3-trifluoropropyltrimethoxysilane, methyltriacetoxysilane, vinyltriacetoxysilane, ethyl triacetoxysilane, di-butoxy diacetoxysilane, phenyl-tripropionoxysilane, methyltris(methylethylketoximo)silane, vinyl-tris-methylethylketoximo)silane, methyltris(methylethylketoximino)silane, methyltris(isopropenoxy)silane, vinyltris(isopropenoxy)silane, ethylpolysilicate, n-propylorthosilicate, ethylorthosilicate,

Dimethyltetraacetoxydisiloxane, propyltrimethoxysilane, tetramethoxysilane tetraethoxysilane, phenyltrimethoxysilane, methyltriacetoxysilane, ethyltriacetoxysilane, tetra(methylethyl ketoximo)silane, methyl-tris(methylethylketoximo)silane and vinyl-tris(methylethylketoximo)silane, and others.

Alternatively, component (c) may be a dipodal molecule having at least two or at least 3 alkoxysilyl terminal groups, for example a compound of the formula

X²₃ - Si - (CH₂)_{f"} - Si - X²₃,

where each X² is an alkoxy group an alkenyl group or an alkyl group and at least two or at least three X² groups are alkoxy groups and subscript f" is an integer of say between 1 and 12. Hence, in the above formula of a dipodal molecule when each X² is an alkoxy group there are six alkoxysilyl terminal groups per molecule. An example is 1,6-bis (trimethoxysilyl)hexane (alternatively known as hexamethoxydisilylhexane), di or trialkoxy silyl terminated polypropyleneoxide, polyurethane, polyacrylates; polyisobutylenes.

Alternatively, component (c) may be a siloxane of the structure

R⁶₃-Si-O-((R⁷)₂SiO)ₐ-Si-R⁶₃

where R⁷ is an alkyl or phenyl group, each R⁶ group may be the same or different and are selected from R⁷, alkyl, phenyl, alkenyl or alkynyl groups. Such a siloxane may have a viscosity of from about 5 to about 100,000 mPa.s at 25 °C which can be measured using the same test method as described above. Examples might include trialkoxy silyl terminated polydialkyl siloxane, di or trialkoxy silyl terminated polyarylalkyl siloxanes,

Component (c) is present in a range of from 1 to 10 wt. % of the one-part RTV condensation curable silicone composition, alternatively from 1.25 to 7.5 weight % of the composition, alternatively from 1.5 to 5.0 weight % of the composition.

### One or more reinforcing fillers (d)

The one or more reinforcing fillers identified as component (d) herein are selected from precipitated silica, fumed silica, precipitated calcium carbonate, or a mixture of two or more thereof.

Preferably said reinforcing inorganic fillers may contain one or more finely divided. Typically, the surface area of the reinforcing filler (d) is at least 15 m²/g in the case of precipitated calcium carbonate measured in accordance with the BET method (ISO 9277: 2010), alternatively 15 to 50 m²/g, alternatively 15 to 25 m²/g.

Silica reinforcing fillers have a typical surface area of at least 50 m²/g in accordance with the BET method (ISO 9277: 2010). In the case of high surface area fumed silica and/or high surface area precipitated silica, these may have surface areas of from 75 to 400 m²/g measured in accordance with the BET method (ISO 9277: 2010), alternatively of from 100 to 300 m²/g in accordance with the BET method (ISO 9277: 2010).

The reinforcing fillers (d) may be hydrophobically treated for example with one or more aliphatic acids, e.g., a fatty acid such as stearic acid or a fatty acid ester such as a stearate, or with organosilanes, organosiloxanes, or organosilazanes hexaalkyl disilazane or short chain siloxane diols to render the filler(s) hydrophobic and therefore easier to handle and obtain a homogeneous mixture with the other adhesive components. Specific examples organosilanes, organosiloxanes, or organosilazanes may include, but are not restricted to, silanol terminated trifluoropropylmethylsiloxane, silanol terminated vinyl methyl (ViMe) siloxane, silanol terminated methyl phenyl (MePh) siloxane, liquid hydroxyldimethyl-terminated polydiorganosiloxane containing an average from 2 to 20 repeating units of diorganosiloxane in each molecule, hydroxyldimethyl terminated phenylmethyl Siloxane, hexaorganodisiloxanes, such as hexamethyldisiloxane, divinyltetramethyldisiloxane; hexaorganodisilazanes, such as hexamethyldisilazane (HMDZ), divinyltetramethyldisilazane and tetramethyldi(trifluoropropyl)disilazane; hydroxyldimethyl terminated polydimethylmethylvinyl siloxane, octamethyl cyclotetrasiloxane, and silanes including but not limited to methyltrimethoxysilane, dimethyldimethoxysilane, vinyltrimethoxysilane, methyltriethoxysilane, vinyltriethoxysilane, chlorotrimethyl silane, dichlorodimethyl silane, trichloromethyl silane.

The surface treatment of the fillers makes them easily wetted by component (a). These surface modified fillers are preferably in a finely divided form and do not clump and can be homogeneously incorporated into the silicone polymer (a) This results in improved room temperature mechanical properties of the uncured compositions. The fillers may be pre-treated or may be treated in situ when being mixed with component (a). A small amount of water can be added together with the silica treating agent(s) as processing aid.

Depending on the filler(s) chosen the reinforcing fillers (d) may be present in an amount of from 2.5 to 60 % by weight (wt. %) of the one-part RTV condensation curable silicone composition. In the case when the selected fillers are precipitated silica and/or fumed silica or a combination thereof the inorganic fillers (d) are present in a range of from about 5.0 to 35 wt. % of the composition, alternatively of from 5 to 30 wt. % of the composition, alternatively of from 5 to 25 wt. % of the composition. However, when reinforcing filler (d) is precipitated calcium carbonate, the composition will tend to include a larger wt. % of the composition, e.g., from 25 to 60 wt. % of the composition, alternatively of from 30 to 60 wt. % of the composition, alternatively of from 35 to 55 wt. % of the composition. When component (d) is a mixture of silica and precipitated calcium carbonate the wt. % will typically somewhere therebetween.

### (e) one or more silicon-containing adhesion promoters

The one-part RTV condensation curable silicone composition as hereinbefore described also comprise one or more silicon-containing adhesion promoters. The one or more adhesion promoters (e) are different from cross-linker (c). For example, the adhesion promoter may be selected from one or more mercaptopropyltrialkoxysilanes, an aminopropyltriethoxysilane, an aminopropyltrimethoxysilane or an amine of the structure:

R¹⁰ₖ(R¹¹O)₃₋ₖSi-Z¹-N(H)- (CH₂)ₘ -NH₂

in which R¹⁰ is an alkyl group containing from 1 to 10 carbon atoms; each R¹¹ may be the same or different and is H or R¹⁰, Z¹ is a linear or branched alkylene group having from 2 to 10 carbon atoms, m is from 2 to 10 and k is zero or 1. The adhesion promoter (e) may be one or more mercaptoalkylsilanes and aminosilane adhesion promoters in each case having two or three hydroxyl or alkoxy groups per molecule. Component (e) may for example comprise a mercaptopropyltrialkoxysilane such as mercaptopropyltrimethoxysilane or a mercaptopropyltriethoxysilane; an aminopropyltriethoxysilane or aminopropyltrimethoxysilane or may comprise:

   R¹⁰ₖ(R¹¹O)₃₋ₖSi-Z¹-N(H)- (CH₂)ₘ -NH₂
in which R¹⁰ is an alkyl group containing from 1 to 10 carbon atoms; each R¹¹ may be the same or different and is H or R¹⁰, Z¹ is a linear or branched alkylene group having from 2 to 10 carbon atoms, m is from 2 to 10 and k is zero or 1.
R¹⁰ is an alkyl group containing from 1 to 10 carbon atoms, alternatively R¹⁰ is an alkyl group containing from 1 to 6 carbon atoms, alternatively, R¹⁰ is a methyl or ethyl group. Each R¹¹ may be the same or different and is H or R¹⁰, alternatively each R¹¹ is R¹⁰. In one alternative all R¹¹ groups are the same. When the R¹¹ groups are the same, it is preferred that they are methyl or ethyl groups. Z¹ is a linear or branched alkylene group having from 2 to 10 carbons, alternatively from 2 to 6 carbons, for example Z¹ may be a propylene group, a butylene group or an isobutylene group. There may be from 2 to 10 m groups, in one alterative m may be from 2 to 6, in another alternative m may be from 2 to 5, in a still further alternative m may be 2 or 3, alternatively m is 2.

Specific examples include but are not limited to aminopropyltriethoxysilane, aminopropyltrimethoxysilane, N-(2-aminoethyl)-3-aminoisobutylmethyldimethoxysilane, N-(2-aminoethyl)-3-aminopropylmethyldimethoxysilane, N-(2-aminoethyl)-2-aminoethylmethyldimethoxysilane, N-(2-aminoethyl)-3-aminoisobutylethyldimethoxysilane, N-(2-aminoethyl)-2-aminoethylmethyldimethoxysilane, N-(2-aminoethyl)-3-aminopropylmethyldiethoxysilane, N-(2-aminoethyl)-2-aminoethylmethyldiethoxysilane, N-(2-aminoethyl)-3-aminoisobutylethyldiethoxysilane, N-(2-aminoethyl)-2-aminoethylmethyldiethoxysilane, N-(2-aminoethyl)-3-aminopropylmethylmethoxyethoxysilane, N-(2-aminoethyl)-2-aminoethylmethylmethoxyethoxysilane, N-(2-aminoethyl)-3-aminoisobutylethylmethoxyethoxysilane, N-(2-aminoethyl)-2-aminoethylmethylmethoxyethoxysilane, N-(2-aminopropyl)-3-aminoisobutylmethyldimethoxysilane, N-(2-aminopropyl)-3-aminopropylmethyldimethoxysilane, N-(2-aminopropyl)-2-aminoethylmethyldimethoxysilane, N-(2-aminopropyl)-3-aminoisobutylethyldimethoxysilane, N-(2-aminopropyl)-2-aminoethylmethyldimethoxysilane, N-(2-aminopropyl)-3-aminopropylmethyldiethoxysilane, N-(2-aminopropyl)-2-aminoethylmethyldiethoxysilane, N-(2-aminopropyl)-3-aminoisobutylethyldiethoxysilane, N-(2-aminopropyl)-2-aminoethylmethyldiethoxysilane, N-(2-aminopropyl)-3-aminopropylmethylmethoxyethoxysilane, N-(2-aminopropyl)-2-aminoethylmethylmethoxyethoxysilane, N-(2-aminopropyl)-3-aminoisobutylethylmethoxyethoxysilane, N-(2-aminopropyl)-2-aminoethylmethylmethoxyethoxysilane as well as their trialkoxy, especially trimethoxy and triethoxy equivalents (where k is zero) such as 3-(2-aminoethyl)-aminopropyltriethoxysilane, 3-(2-aminoethyl)-aminopropyltrimethoxysilane, N-(3-(Trimethoxysilyl)propyl)butylamine and Bis(trimethoxysilylpropyl)amine.

The adhesion promoter when present is present in an amount of from 0.1 to 3.75% by weight of the composition, alternatively, in an amount of 0.1- 2.5 % by weight of the composition, alternatively, in an amount of 0.1- 2.0 % by weight of the composition, alternatively, in an amount of 0.2 to 1.0 % by weight of the composition.

### (f) one or more condensation curing catalysts selected from a catalyst comprising a titanate-based compound, a zirconate-based compound or a mixture thereof

Component (f) comprises a condensation catalyst which increases the speed at which the composition cures. Titanate-based and/or zirconate-based catalysts may comprise a compound according to the general formula Ti[OR²²]₄ or Zr[OR²²]₄ where each R²² may be the same or different and represents a monovalent, primary, secondary or tertiary aliphatic hydrocarbon group which may be linear or branched containing from 1 to 10 carbon atoms. Optionally the titanate may contain partially unsaturated groups. However, preferred examples of R²² include but are not restricted to methyl, ethyl, propyl, isopropyl, butyl, tertiary butyl and a branched secondary alkyl group such as 2, 4-dimethyl-3-pentyl. In one embodiment each R²² is the same, and R²² is an isopropyl, branched secondary alkyl group or a tertiary alkyl group, in particular, tertiary butyl. Suitable examples include for the sake of example, tetra n-butyl titanate, tetra t-butyl titanate, tetra t-butoxy titanate, tetraisopropoxy titanate and zirconate equivalents.

Alternatively, the titanate may be chelated. The chelation may be with any suitable chelating agent such as an alkyl acetylacetonate such as methyl or ethyl acetylacetonate. Alternatively, the titanate may be monoalkoxy titanates bearing three chelating agents such as for example 2-propanolato, tris isooctadecanoato titanate and diisopropoxydiethylacetoacetate titanate or titanium ethyl acetoacetate complexes mixed with a methyl-trimethoxy silane. Component (f) may be present in any suitable amount, such as from 0.05 wt. % to 1.5 wt. % of the one-part RTV condensation curable silicone composition, alternatively in an amount of from 0.05 wt. % to 1.25 wt. % of the composition, alternatively in an amount of from 0.1 wt. % to 1.0 wt. % of the composition, alternatively in an amount of from 0.1 wt. % to 0.75 wt. % of the composition.

### (g) one or more non-reinforcing fillers which non-reinforcing fillers may be hydrophobically treated.

Non-reinforcing fillers, which might be used in addition to component (d) herein include aluminite, calcium sulphate (anhydrite), gypsum, nepheline, svenite, quartz, calcium sulphate, magnesium carbonate, ground calcium carbonate, clays such as kaolin, aluminium trihydroxide, magnesium hydroxide (brucite), graphite, copper carbonate, e.g., malachite, nickel carbonate, e.g., zarachite, barium carbonate, e.g., witherite and/or strontium carbonate e.g., strontianite.

Aluminium oxide, silicates from the group consisting of olivine group; garnet group; aluminosilicates; ring silicates; chain silicates; and sheet silicates. The olivine group comprises silicate minerals, such as but not limited to, forsterite and Mg₂SiO₄. The garnet group comprises ground silicate minerals, such as but not limited to, pyrope; Mg₃Al₂Si₃O₁₂; grossular; and Ca₂Al₂Si₃O₁₂. Aluminosilicates comprise ground silicate minerals, such as but not limited to, sillimanite; Al₂SiO₃; mullite; 3Al₂O₃.2SiO₂; kyanite; and Al₂SiO₅.

The ring silicates group comprises silicate minerals, such as but not limited to, cordierite and Al₃(Mg,Fe)₂[Si₄AlO₁₈]. The chain silicates group comprises ground silicate minerals, such as but not limited to, wollastonite and Ca[SiO₃].

The sheet silicates group comprises silicate minerals, such as but not limited to, mica; K₂AI₁₄[Si₆Al₂O₂₀](OH)₄; pyrophyllite; Al₄[Si₈O₂₀](OH)₄; talc; Mg₆[Si₈O₂₀](OH)₄; serpentine for example, asbestos; Kaolinite; Al₄[Si₄O₁₀](OH)₈; and vermiculite.

Such additional fillers may also be hydrophobically treated in the same manner as component (d) as described above. When present the non-reinforcing fillers tend to be used to replace some of component (d), hence when component (d) the reinforcing filler is precipitated calcium carbonate and a non-reinforcing filler is also present in the composition the total amount of precipitated calcium carbonate and non-reinforcing filler will still be no more than the upper limit 60 wt. % of the composition. In one embodiment of the composition when component (d) is precipitated calcium carbonate the composition also comprises ground calcium carbonate. When present the non-reinforcing filler may be present in an amount of from greater than zero to 20 wt. % of the composition.

### Optional Additives

Optional additives may be used if required necessary. These may include pigments, rheology modifiers, cure modifiers, and fungicides and/or biocides and the like; It will be appreciated that some of the additives may be included in more than one list of additives. Such additives would then have the ability to function in all the different ways referred to.

### Pigments

The one-part RTV condensation curable silicone composition as described herein may further comprise one or more pigments and/or colorants. The pigments and/or colorants may be coloured, white, black, metal effect, and luminescent e.g., fluorescent and phosphorescent. Pigments are utilized to colour the composition as required. Any suitable pigment may be utilized providing it is compatible with the composition herein. In one-part RTV condensation curable silicone compositions pigments and/or coloured (non-white) fillers e.g., carbon black may be utilized in the catalyst package to colour the end sealant product.

Suitable white pigments and/or colorants include titanium dioxide, zinc oxide, lead oxide, zinc sulfide, lithophone, zirconium oxide, and antimony oxide.

Suitable non-white inorganic pigments and/or colorants include, but are not limited to, iron oxide pigments such as goethite, lepidocrocite, hematite, maghemite, and magnetite black iron oxide, yellow iron oxide, brown iron oxide, and red iron oxide; blue iron pigments; chromium oxide pigments; cadmium pigments such as cadmium yellow, cadmium red, and cadmium cinnabar; bismuth pigments such as bismuth vanadate and bismuth vanadate molybdate; mixed metal oxide pigments such as cobalt titanate green; chromate and molybdate pigments such as chromium yellow, molybdate red, and molybdate orange; ultramarine pigments; cobalt oxide pigments; nickel antimony titanates; lead chrome; carbon black (when present, carbon black will function as both a non-reinforcing filler and colorant); lampblack, and metal effect pigments such as aluminium, copper, copper oxide, bronze, stainless steel, nickel, zinc, and brass.

Suitable organic non-white pigments and/or colorants include phthalocyanine pigments, e.g. phthalocyanine blue and phthalocyanine green; monoarylide yellow, diarylide yellow, benzimidazolone yellow, heterocyclic yellow, DAN orange, quinacridone pigments, e.g. quinacridone magenta and quinacridone violet; organic reds, including metallized azo reds and nonmetallized azo reds and other azo pigments, monoazo pigments, diazo pigments, azo pigment lakes, β-naphthol pigments, naphthol AS pigments, benzimidazolone pigments, diazo condensation pigment, isoindolinone, and isoindoline pigments, polycyclic pigments, perylene and perinone pigments, thioindigo pigments, anthrapyrimidone pigments, flavanthrone pigments, anthanthrone pigments, dioxazine pigments, triarylcarbonium pigments, quinophthalone pigments, and diketopyrrolo pyrrole pigments.

Typically, the pigments and/or colorants, when particulates, have average particle diameters in the range of from 10 nm to 50 µm, preferably in the range of from 40 nm to 2 µm. The pigments and/or colorants when present are present in the range of from 2, alternatively from 3, alternatively from 5 to 20 wt. % of the composition.

### Rheology modifiers

Rheology modifiers which may be incorporated in one-part RTV condensation curable silicone composition include silicone organic co-polymers such as those described in EP0802233 based on polyols of polyethers or polyesters; non-ionic surfactants selected from the group consisting of polyethylene glycol, polypropylene glycol, ethoxylated castor oil, oleic acid ethoxylate, alkylphenol ethoxylates, copolymers or ethylene oxide and propylene oxide, and silicone polyether copolymers; as well as silicone glycols. For some systems these rheology modifiers, particularly copolymers of ethylene oxide and propylene oxide, and silicone polyether copolymers, may enhance the adhesion to substrates, particularly plastic substrates.

### UV and/or light stabilizers

UV and/or light stabilizers may include, for the sake of example include benzotriazole, ultraviolet light absorbers and/or hindered amine light stabilizers (HALS) such as the TINUVIN^{®} product line from Ciba Specialty Chemicals Inc.

### Biocides

Biocides may additionally be utilized in the composition if required. It is intended that the term "biocides" includes bactericides, fungicides and algicides, and the like. Suitable examples of useful biocides, which may be utilized in compositions as described herein, include, for the sake of example:
Carbamates such as methyl-N-benzimidazol-2-ylcarbamate (carbendazim) and other suitable carbamates, 10,10'-oxybisphenoxarsine, 2-(4-thiazolyl)-benzimidazole, N-(fluorodichloromethylthio)phthalimide, diiodomethyl p-tolyl sulfone, if appropriate in combination with a UV stabilizer, such as 2,6-di(tert-butyl)-p-cresol, 3-iodo-2-propinyl butylcarbamate (IPBC), zinc 2-pyridinethiol 1-oxide, triazolyl compounds and isothiazolinones, such as 4,5-dichloro-2-(n-octyl)-4-isothiazolin-3-one (DCOIT), 2-(n-octyl)-4-isothiazolin-3-one (OIT) and n-butyl-1,2-benzisothiazolin-3-one (BBIT). Other biocides might include for example Zinc Pyridinethione, 1-(4-Chlorophenyl)-4,4-dimethyl-3-(1,2,4-triazol-1-ylmethyl)pentan-3-ol and/or 1-[[2-(2,4-dichlorophenyl)-4-propyl-1,3-dioxolan-2-yl] methyl]-1H-1,2,4-triazole.

The fungicide and/or biocide may suitably be present in an amount of from 0 to 0.3wt. % of the composition and may be present in an encapsulated form where required such as described in EP2106418.

Hence, the one-part RTV condensation curable silicone composition which is suitable for application on porous substrates at a temperature of at least 40°C described herein may comprise An organopolysiloxane polymer having at least two hydroxyl or hydrolysable groups per molecule
(a) of the formula

   X₃₋ₙRₙSi-Z- (R¹_{y}SiO_{(4-y)/2})_{z}-SIR¹₂-Z-Si-RₙX₃₋ₙ (1)

   in which each X is independently a hydroxyl group or an alkoxy group, each R is an alkyl, alkenyl or aryl group, each R¹ is an X group, alkyl group, alkenyl group or aryl group and Z is a divalent organic group;
   n is 0 or 1, y is 0, 1 or 2, and preferentially 2 and z is an integer such that said organopolysiloxane polymer has a viscosity of from 10,000 to 150,000 mPa.s at 25°C, alternatively from 30,000 to 140,000mPa.s at 25°C, in accordance with Corporate test method CTM 0050, which is publicly available, and which is based on ASTM D 1084-16 method B, using a Brookfield HBDV-III Ultra Rheometer equipped with a cone-and-plate geometry using spindle 52, in an amount of from 30 to 90 wt. % of the composition, alternatively 35 to 75%, alternatively 35 to 60 wt. % of the composition;
(b) an alkoxylated MQ silicone resin optionally in the presence of a polysiloxane carrier fluid having a molar ratio of M units to Q units of from 0.1: 1.0 to 1.0 to 1.0; wherein each Q type siloxane unit has the structure SiO_{4/2} and the M type siloxane units either have the structure R²₂ R⁸SiO_{1/2}- or are present in the form of a mixture of R²₂ R⁸SiO_{1/2}- and R²□SiO_{1/2}- groups;
   where each R² group is an alkyl group having from 1 to 6 carbons; and R⁸ is an alkenyl group having from 2 to 6 carbons; or R⁸ is an X₃₋ₙRₙSi-Z- group with X, R, Z and n are all as previously defined; wherein at least 50% of the R⁸ groups are silicon bonded X₃₋ₙRₙSi-Z- groups;
   which component (b) is present in the composition in an amount of from 7.5 to 25 wt. %; alternatively, in an amount of from 7.5 to 22.5 wt. %;
(c) is one or more cross-linkers in the form of a silicon containing compound having at least two, alternatively or at least three hydrolysable groups per molecule present
   in a range of from 1 to 10 wt. % of the composition, alternatively from 1.25 to 7.5 weight % of the composition, alternatively from 1.5 to 5.0 weight % of the composition;
(d) one or more reinforcing fillers selected from precipitated silica or fumed silica in each case having a surface area of at least 50 m²/g in accordance with the BET method (ISO 9277: 2010) or precipitated calcium carbonate having a surface area of at least 15 m²/g measured in accordance with the BET method (ISO 9277: 2010); in an amount of from 2.5 to 60 % by weight (wt. %) of the composition, wherein when the selected fillers are precipitated silica and/or fumed silica or a combination thereof the inorganic fillers (d) are present in a range of from about 5.0 to 35 wt. % of the composition, alternatively of from 5 to 30 wt. % of the composition, alternatively of from 5 to 25 wt. % of the composition and wherein when the selected filler is precipitated calcium carbonate, the composition will tend to include a larger wt. % of the composition, e.g. from 25 to 60 wt. %, alternatively of from 30 to 60 wt. % of the composition, alternatively of from 35 to 55 wt. % of the composition;
(e) one or more silicon-containing adhesion promoters such as for example a mercaptopropyltrialkoxysilane; an aminopropyltriethoxysilane or aminopropyltrimethoxysilane or may comprise:

   R¹⁰ₖ(R¹¹O)₃₋ₖSi-Z¹-N(H)- (CH₂)ₘ -NH₂

   in which R¹⁰ is an alkyl group containing from 1 to 10 carbon atoms; each R¹¹ may be the same or different and is H or R¹⁰, Z¹ is a linear or branched alkylene group having from 2 to 10 carbon atoms, m is from 2 to 10 and k is zero or 1. The adhesion promoter is present in an amount of from 0.1 to 3.75% by weight of the composition, alternatively, in an amount of 0.1- 2.5 % by weight of the composition, alternatively, in an amount of 0.1- 2.0 % by weight of the composition, alternatively, in an amount of 0.2 to 1.0 % by weight of the composition.

Component (f) comprises a condensation catalyst which increases the speed at which the composition cures. Titanate-based and/or zirconate-based catalysts may comprise a compound according to the general formula Ti[OR²²]₄ or Zr[OR²²]₄ where each R²² may be the same or different and represents a monovalent, primary, secondary or tertiary aliphatic hydrocarbon group which may be linear or branched containing from 1 to 10 carbon atoms. Optionally the titanate may contain partially unsaturated groups. However, preferred examples of R²² include but are not restricted to methyl, ethyl, propyl, isopropyl, butyl, tertiary butyl and a branched secondary alkyl group such as 2, 4-dimethyl-3-pentyl. In one embodiment each R²² is the same, and R²² is an isopropyl, branched secondary alkyl group or a tertiary alkyl group, in particular, tertiary butyl. Suitable examples include for the sake of example, tetra n-butyl titanate, tetra t-butyl titanate, tetra t-butoxy titanate, tetraisopropoxy titanate and zirconate equivalents. Alternatively, the titanate may be chelated. Component (f) may be present in any suitable amount, such as from 0.05 wt. % to 1.5 wt. % of the one-part RTV condensation curable silicone composition, alternatively in an amount of from 0.05 wt. % to 1.25 wt. % of the composition, alternatively in an amount of from 0.1 wt. % to 1.0 wt. % of the composition,

Component (g) one or more non-reinforcing fillers which non-reinforcing fillers may be hydrophobically treated.

Non-reinforcing fillers, which might be used in addition to component (d) herein include aluminite, calcium sulphate (anhydrite), gypsum, nepheline, svenite, quartz, calcium sulphate, magnesium carbonate, ground calcium carbonate, clays such as kaolin, aluminium trihydroxide, magnesium hydroxide (brucite), graphite, copper carbonate, e.g., malachite, nickel carbonate, e.g., zarachite, barium carbonate, e.g., witherite and/or strontium carbonate e.g., strontianite. When present the non-reinforcing fillers tend to be used to replace some of component (d). Hence, when component (d) the reinforcing filler is precipitated calcium carbonate and a non-reinforcing filler is also present in the composition the total amount of precipitated calcium carbonate and non-reinforcing filler will still be no more than the upper limit 60 wt. % of the composition. In one embodiment of the composition when component (d) is precipitated calcium carbonate the composition also comprises ground calcium carbonate. In one embodiment component (d) the reinforcing filler is precipitated calcium carbonate and component (g) is ground calcium carbonate and the total amount of precipitated calcium carbonate +and ground calcium carbonate is from 30 to 60 wt. % of the composition. When present the non-reinforcing filler may be present in an amount of from greater than zero to 20 wt. % of the composition.

The one-part RTV condensation curable silicone composition may comprise any combination of the above providing that the total composition of ingredients (a) to (g) together with any other optional ingredients included in the composition has a value of 100 wt. % of the composition.

There is also provided a method of making an elastomeric sealant material by
(i) mixing together components (a) to (g) and any required additives of a one-part RTV condensation curable silicone composition as hereinbefore described; and
(ii) curing the said composition.

The one-part RTV condensation curable silicone composition as described above may be, for example initially prepared by mixing all the ingredients together in any suitable order.

For example, components (a) organosiloxane polymer, (c) cross-linker, (e) adhesion promoter and (f) catalyst may be initially mixed together then components (d) reinforcing filler and (g) non-reinforcing filler are added and mixed for at least 10 minutes, alternatively at least 15 minutes, alternatively for 20 minutes or more after which component (b) and optionally one or more optional additives may be added, when required and then the composition is utilised as a sealant composition or is packaged into suitable sealant cartridges or the like prior to use. If possible, the filler is anhydrous.

In an alternative process the one-part RTV condensation curable silicone composition as described above may be prepared by mixing reinforcing filler (d), non-reinforcing filler (g) and/or pigment when present is/are first mixed into the organopolysiloxane polymer (a), optionally, if required in combination with a hydrophobic treating agent so that the filler and optional pigment may be hydrophobically treated in situ during the mixing into the polymer. Once the filler is adequately mixed into the polymer (and if desired has been hydrophobically treated) then the remaining components are added in any suitable order to make the complete composition. In the latter instance, the process for making the one-part RTV condensation curable silicone composition may comprise the following steps:-
1) Gradually add the or each reinforcing filler (d) and any non-reinforcing filler (g), when present, and, if required hydrophobing filler treating agent into the organopolysiloxane polymer (a) for a predetermined time, under vacuum, if deemed necessary; to form a polymer base;
2) Either adding the remaining ingredients into the mixture resulting from step (1) or preparing a premix of the remaining ingredients and then introducing said premix into the mixture individually in any suitable order of step (1) in each case under vacuum if deemed necessary;

Finally release the vacuum and, if to be stored package the final composition.

As previously indicated, preferably once mixed, unless to be used immediately, the composition is sealed in one or more moisture-tight containers and is stored.

The one-part RTV condensation curable silicone composition is applied onto one or more substrates before cure selected from glass, metal, stone, marble, brick, concrete, cement and other cementitious substrates and/or combinations thereof.

There is also provided herein an elastomeric sealant material which is the cured product of the one- part RTV condensation curable silicone composition as hereinbefore described.

We have found that surprisingly by introducing the alkoxylated MQ resin of component (b) to the composition herein we are able to provide an improved high temperature durability even at temperatures greater than (>) 75°C, and even greater than (>) 80°C. This provides an ability to maintain adhesive integrity to a façade joint when subjected to the combined stresses at said high environmental temperatures or greater. Upon cure as previously indicated the elastomeric material described herein is able to maintain a high-tension strength retention rate and shear strength retention rate, in each case (greater than 75%) at 80°C, while maintaining a high tear strength retention rate of above 75% at room temperature to meet, international standard EOTA-ETAG 002 of November 2005. Previously it has been found to be exceptionally difficult to do this in the case of elastomeric materials cured from one-part sealant compositions designed to undergo skin or diffusion cure because unlike previous compositions, the resulting elastomer can achieve all three requirements. Typically having an increased cross-link density in an elastomer improves tension strength retention rate and shear strength retention rate at 80°C but the tear strength retention rate at room temperature would be logically expected to decrease. This achievement means the composition herein is useful as construction sealant, preferably as a silicone structural glazing (SSG) sealant for e.g., building curtain wall applications in geographies of extreme climate, such as the high temperature.

Such a development will be very helpful for the building who have a preference to use one-part sealants as they are more convenient for structural bonding applications of glass and metal in factory or field situations and in this case is particularly designed for use in SSG in areas subjected to extremely hot temperatures such as up to at 80°C or higher.

Preferably the composition herein is gunnable. Hence, the one-part RTV condensation curable silicone composition as hereinbefore described may be a gunnable sealant composition used for
(i) space/gap filling applications;
(ii) seal applications, such as sealing the edge of a lap joint in a construction membrane; or
(iii) a stain-resistant weather sealing sealant;
(iv) adhering at least two substrates together; and/or
(v) a laminating layer between two substrates to produce a laminate of the first substrate, the sealant product and the second substrate.

In the case of (v) above when used as a layer in a laminate, the laminate structure produced is not limited to three layers. Additional layers of cured sealant and substrate may be applied.

In the case of the one-part RTV condensation curable silicone composition as hereinbefore described, there is provided a method for filling a space between two substrates so as to create a seal therebetween, comprising:
a") providing a one-part RTV condensation curable silicone composition as hereinbefore described, and either
b") applying the one-part RTV condensation curable silicone composition on to a first substrate, and bringing a second substrate in contact with the silicone composition that has been applied to the first substrate wherein either or both of said substrates are porous substrates at a temperature of at least 40°C, or
c") filling a space formed by the arrangement of a first substrate and a second substrate wherein either or both of said substrates are porous substrates at a temperature of at least 40°C, with the one-part RTV condensation curable silicone composition and
d") curing same.

A one-part RTV condensation curable silicone composition as hereinbefore described may be applied on to any suitable substrate but given the application is particularly designed for application on substrates such as non-porous building materials such as metals e.g., aluminium and steel and glass as well as porous building materials such as marble, brick, concrete, cement and other cementitious substrates combinations

### Examples

A series of examples are now provided.

All viscosity measurements were taken at 25°C unless otherwise indicated. Unless otherwise indicated, all viscosities in the examples were measured in accordance with the ASTM D4287 Cone and Plate Method using a Brookfield **DV-III** Ultra Rheometer.

The compositions of comparatives 1 to 4 (C. 1 - C. 4) are provided in Table 1a and the Examples 1 to 5 (Ex. 1 to Ex. 5) are provided below in Table 1b.

**Table 1a: Formulation of Comparative Examples C. 1 to C. 4 in Wt. %**

| | **C.1** | **C.2** | **C.3** | **C.4** |
|---|---|---|---|---|
| Polymer 1 | 24.81 | 13.62 | 35.48 | 32.25 |
| Polymer 2 | 16.8 | 28.0 | | |
| Polymer 3 | | | 9.0 | |
| Silicone resin 1 | | | | 10.0 |
| reinforcing filler | 38.0 | 38.0 | 38.0 | 36.0 |
| Non-reinforcing filler | 13.0 | 13.0 | 10.0 | 14.0 |
| pigment | 3.0 | 3.0 | 3.0 | 3.0 |
| Methyl trimethoxy silane | 3.1 | 3.1 | 3.3 | 3.4 |
| 3-Mercaptopropyl Trimethoxy Silane | 0.18 | 0.18 | 0.18 | 0.18 |
| N-[3-(Trimethoxysilyl)propyl]ethylenediamine | 0.11 | 0.10 | 0.09 | 0.09 |
| catalyst | 1.0 | 1.0 | 0.95 | 1.08 |

**Table 1b: Formulations of Examples Ex. 1 to Ex. 5 in wt. %**

| | Ex. 1 | Ex. 2 | Ex. 3 | Ex. 4 | Ex. 5 |
|---|---|---|---|---|---|
| Polymer 1 | 33.43 | | | 29.25 | |
| Polymer 2 | | 19.51 | 30.25 | | 21.85 |
| Silicone resin 2 | | 22.2 | | 6.0 | 11.1 |
| Silicone resin 3 | 12.0 | | 12.0 | 7.0 | 9.3 |
| reinforcing filler | 33.0 | 38.0 | 33.0 | 33.0 | 36.0 |
| Non-reinforcing filler | 17.0 | 13.0 | 17.0 | 17.0 | 14.0 |
| pigment | | 2.8 | 3.0 | 3.0 | 3.0 |
| Methyl trimethoxy silane | 3.4 | 3.2 | 3.4 | 3.4 | 3.4 |
| 3-Mercaptopropyl Trimethoxy Silane | | 0.18 | 0.18 | 0.18 | 0.18 |
| N-[3-(Trimethoxysilyl)propyl]ethylenediamine | 0.09 | 0.11 | 0.09 | 0.09 | 0.09 |
| catalyst | | 1.0 | 1.08 | 1.08 | 1.08 |

In Tables 1a and 1b:
**Polymer 1:** Polymer 1 was a polydimethylsiloxane polymer terminated with approximately 80% (MeO)₃ Si-CH₂-CH₂- terminal groups and the remainder vinyl terminal groups having a viscosity of approximately 60,000mPa.s at 25°C;
**Polymer** 2 polymer was a polydimethylsiloxane polymer terminated with approximately 80% (MeO)₃ Si-CH₂-CH₂- terminal groups and the remainder vinyl terminal groups having a viscosity of approximately 10,000mPa.s at 25°C;
**Polymer 3** a branched polymer of the structure [R^{A}_{d} R^{B}_{3-d} Si-(O-Si R¹⁴₂)ₓ-O]₄ Si where each R^{A} was (MeO)₃ Si-CH₂-CH₂- and R^{B} being a vinyl group and each R¹⁴ is methyl and subscripts d, v, w, and x are as previously indicated; which branched polymer has a viscosity of about 600 mPa.s at 25°C and has approximately 80% of the total number of R^{A} and R^{B} groups being R^{A} groups;
**Silicone resin 1 mixture:** an MQ resin mixture having approximately 0.8 % of vinyl groups having about 35 wt. % dimethyl vinylated and trimethylated silicone resin in a dimethylvinyl polydimethylsiloxane having a viscosity of about 2100mPa.s, the molar ratio of M units to Q units is greater than 0.1 : 1 and less than 1 : 1;
**Silicone resin 2 mixture:** an MQ resin mixture originally having approximately 0.6 % of vinyl groups and containing about 27 wt. % Dimethyl vinylated and trimethylated silicone resin in a dimethylvinyl polydimethylsiloxane having a viscosity of about 60000 mPa.s at 25°C) with approximately 90 % of the vinyl groups having been converted into (MeO)₃ Si-CH₂-CH₂ terminal groups, the molar ratio of M units to Q units is greater than 0.1 : 1 and less than 1 : 1;
**Silicone resin 3 mixture:** an MQ resin mixture originally having approximately 0.8 % of vinyl groups and containing about 35 wt. % Dimethyl vinylated and trimethylated silicone resin in a dimethylvinyl polydimethylsiloxane having a viscosity of about 2100 mPa.s (= silicone resin mixture 1) with approximately 60 % of the vinyl groups having been converted into (MeO)₃ Si-CH₂-CH₂ terminal groups, the molar ratio of M units to Q units is greater than 0.1 : 1 and less than 1 : 1;
**Precipitated calcium carbonate (PCC) filler:** The PCC was grade XTCC-201 commercially available from Shanxi Xintai Hengxin NanoMaterials Technology Co. Limited of Shanxi Province, China which is treated with stearic acid and has an average particle size:40nm~100nm (data sheet);
**Ground calcium carbonate (GCC):** The GCC was Omyacarb^{™} 2 T which is a fine, coated ground calcium carbonate (GCC) commercially available from OMYA AG;
**Pigment:** The pigment used was a combination of 20 wt. % carbon black in a dimethylhydroxy terminated polydimethylsiloxane; and
**Catalyst:** The catalyst used herein was Tyzor^{™} PITA SM which is an 80:20 wt. % mixture of Diisopropoxy-bisethylacetoacetatotitanate and methyltrimethoxy silane and is commercially available from Dorf Ketal Speciality Catalysts LLC of Texas USA.

The examples and comparative examples were prepared in a 10 litre Turello mixer (commercially available from Turello s.r.l., Italy). Polymer(s), cross-linker, catalyst and N-[3-(Trimethoxysilyl)propyl]ethylenediamine were mixed together and then with the PCC and GCC for 20 minutes, pigment (when present) and the silicone resin(s) were then introduced and mixed in before the addition of 3-Mercaptopropyl Trimethoxy Silane (when present) which was again mixed in. The resulting compositions were then either used immediately for testing or were packaged into cartridges before testing.

The compositions utilised for each example and comparative example were then cured for a period of 28 days at room temperature between a glass test piece and an anodised aluminium test piece. The samples were in each case then tested for a variety of properties The test methods used to generate the results in Table 2a are provided below:
**Tack free time (TFT)** was measured via polyethylene contact following Dow's corporate test method (CTM) 0095 with the results depicted measured in minutes. The corporate test (CTM) method is available to the public from Dow Silicones Corporation upon request.
**Shore A Durometer** was measured following ASTM D2240-97.

The method for determining the tension strength, shear strength and tear strength and the preparation of the required test specimens is described in EOTA-ETAG 002 of November 2005.

The test specimens were prepared by first thoroughly cleaning float glass and anodized aluminium substrates with acetone and then these were adhered together using the sample under assessment. Tension strength (tension rupture) testing was undertaken in accordance with the method stipulated in 5.1.4.1.1 of EOTA-ETAG 002 of November 2005. Shear strength (shear rupture) was measured in accordance with 5.1.4.1.1 of EOTA-ETAG 002 of November 2005. All tear strength (Resistance to tearing) measurements were undertaken at room temperature in accordance with the method stipulated in 5.1.4.6.4 of EOTA-ETAG 002 of November 2005. The tension strength retention rate and shear strength retention rate testing was undertaken in accordance with the method stipulated in 6.1.4.1.2 of EOTA-ETAG 002 of November 2005. The tear strength retention rate testing was undertaken in accordance with the method stipulated in 6.1.4.6.4 of EOTA-ETAG 002 of November 2005.

CF is cohesive failure. Cohesive failure occurs when a fracture allows a layer of adhesive to remain on both surfaces, i.e., it is observed when the sealant itself breaks without detaching from the substrate. Adhesive failure (AF) is interfacial bond failure between an adhesive and an adherend. In some cases, a mixed failure mode may be observed; that is some areas peel-off (i.e., AF) while some remain covered with coating (i.e., CF). In such cases, the portions of surface displaying CF (%CF).

**Table 2a. tested results for comparative examples C. 1 to C. 4**

| Tested property | **Target** | **C. 1** | **C. 2** | **C. 3** | **C. 4** |
|---|---|---|---|---|---|
| TFT, minutes | | 34 | 52 | 40 | 26 |
| Hardness, shore A | | 41.0 | 45.0 | 46.5 | 35.3 |
| Tension strength at 23°C (MPa) | | 1.299 | 1.355 | 1.374 | 1.331 |
| Tension rupture at 23°C (% CF) | ≥ 90% | 100 | 100 | 100 | 100 |
| Tension elongation at break at 23°C (%) | | 120 | 130 | 94 | 236 |
| Tension strength, MPa (80°C) | | 1.065 | 1.165 | 1.291 | 0.985 |
| Tension rupture at 80°C (% CF) | ≥ 90% | 100 | 100 | 100 | 100 |
| Tension strength retention rate at 80°C (%) | ≥ 75% | 82 | 86 | 94 | 74 |
| Shear strength at 23°C (MPa) | | 1.005 | 0.947 | 0.961 | 1.163 |
| Shear rupture at 23°C (% CF) | ≥ 90% | 100 | 100 | 100 | 100 |
| Shear strength, MPa (80°C) | | 0.784 | 0.739 | 0.807 | 0.779 |
| Shear rupture at 80°C (% CF) | ≥ 90% | 100 | 100 | 100 | 100 |
| Shear strength retention rate at 80°C (%) | ≥ 75% | 78 | 78 | 84 | 67 |
| Tear strength, MPa (23°C) | | 0.896 | 0.813 | 0.879 | 1.291 |
| Tear rupture at 23°C (% CF) | ≥ 90% | 100 | 100 | 100 | 100 |
| Tear strength retention rate at 23°C (%) | ≥ 75% | 69 | 60 | 64 | 97 |

Hence, as seen in Table 2a, even though they are comparatives all sealants resulting from curing comparative compositions C. 1 to 4 herein provide greater than 90% cohesive failure which is an excellent result when tested at 80°C. Furthermore, the crosslinking density of the elastomers produced using the compositions in Table 1a are intentionally increased by using increasing amounts of low viscosity polymers (C. 1 and C. 2) and using polymer in C. 3. It will be noted from Table 2a that as anticipated the tension strength retention rate and shear strength retention rate at 80°C are both improved with increased crosslinking density of the resulting elastomers but in each instance the tear strength retention rate at room temperature is insufficient.

In C. 4 it can be seen that use of a vinyl terminated resin instead of component (b) results in a tension strength retention rate and shear strength retention rate at 80°C of less the required 75% of EOTA-ETAG 002 of November 2005.

**Table 2b. tested results for Examples Ex. 1 to Ex. 5**

| **Tested property** | **Target** | **Ex. 1** | **Ex. 2** | **Ex. 3** | **Ex. 4** | **Ex.** 5 |
|---|---|---|---|---|---|---|
| TFT, minutes | | 25 | 30 | 22 | 22 | 20 |
| Hardness, shore A | | 53.5 | 60.8 | 53.5 | 52.0 | 57.2 |
| Tension strength at 23°C (MPa) | | 1.450 | 1.391 | 1.266 | 1.396 | 1.472 |
| Tension rupture at 23°C (% CF) | ≥ 90% | 100 | 100 | 100 | 100 | 100 |
| Tension elongation at break at 23°C (%) | | 106 | 46 | 68 | 109 | 66 |
| Tension strength, at 80°C (MPa) | | 1.407 | 1.321 | 1.215 | 1.326 | 1.354 |
| Tension rupture at 80°C (% CF) | ≥ 90% | 100 | 100 | 100 | 100 | 100 |
| Tension strength retention rate at 80°C (%) | ≥ 75% | 97 | 95 | 96 | 95 | 92 |
| Shear strength at 23°C (MPa) | | 1.072 | 1.040 | 0.944 | 1.185 | 0.959 |
| Shear rupture at 23°C (% CF) | ≥ 90% | 100 | 100 | 100 | 100 | 100 |
| Shear strength, at 80°C (MPa) | ≥ 75% | 0.858 | 0.832 | 0.755 | 0.912 | 0.863 |
| Shear rupture at 80°C (% CF) | ≥ 90% | 100 | 100 | 100 | 100 | 100 |
| Shear strength retention rate at 80°C (%) | ≥ 75% | 80 | 80 | 80 | 77 | 90 |
| Tear strength, at 23°C (MPa) | | 1.160 | 1.168 | 0.987 | 1.131 | 1.178 |
| Tear rupture at 23°C (% CF) | ≥ 90% | 100 | 100 | 100 | 100 | 100 |
| Tear strength retention rate at 23°C (%) | ≥ 75% | 80 | 84 | 78 | 81 | 80 |

As shown in Ex. 1 to Ex. 5 the introduction of component (b) silicone resins gave high tension strength retention rate and shear strength retention rate values (greater than 75%) at 80°C while maintaining a high tear strength retention rate (above 75%) at room temperature as required by the EOTA-ETAG 002 standard of November 2005. Hence, a surprising but practical way to make one-component SSG sealant to meet high standard requirements by construction industry.

## Claims

1. A one-part RTV condensation curable silicone composition comprising the following components:
(a) an organopolysiloxane polymer of the formula
X₃₋ₙRₙSi-Z- (R¹_{y}SiO_{(4-y)/2})_{z} -SIR¹₂ -Z-Si-RₙX₃₋ₙ
in which each X is independently an alkoxy group, each R is an alkyl, alkenyl or aryl group, each R¹ is an X group, alkyl group, alkenyl group or aryl group and Z is a divalent organic group;
n is 0 or 1, y is 0, 1 or 2, preferably 2 and z is an integer such that said organopolysiloxane polymer has a viscosity, determined as disclosed in the description according to ASTM D4287, of from 10,000 to 150,000 mPa.s at 25°C, in an amount of from 30 to 80 wt. % of the composition;
(b) an alkoxylated MQ silicone resin optionally in the presence of a polysiloxane carrier fluid having a molar ratio of M units to Q units of from 0.1: 1.0 to 1.0 to 1.0; wherein each Q type siloxane unit has the structure SiO_{4/2} and the M type siloxane units either have the structure R²₂ R⁸SiO_{1/2}- or are present in the form of a mixture of R²₂ R⁸SiO_{1/2}- and R²₃SiO_{1/2}- groups;
where each R² group is an alkyl group having from 1 to 6 carbons; and R⁸ is an alkenyl group having from 2 to 6 carbons; or R⁸ is an X₃₋ₙRₙSi-Z- group with X, R, Z and n are all as previously defined; wherein at least 50% of the R⁸ groups are silicon bonded X₃₋ₙRₙSi-Z- groups;
which component (b) is present in the composition in an amount of from 7.5 to 25 wt. %;
(c) one or more cross-linkers in the form of a silicon containing compound having at least two, alternatively or at least three hydrolysable groups per molecule;
(d) one or more reinforcing fillers selected from precipitated silica, fumed silica or precipitated calcium carbonate which reinforcing fillers are optionally hydrophobically treated;
(e) one or more silicon-containing adhesion promoters;
(f) one or more condensation curing catalysts selected from a catalyst comprising a titanate-based compound, a zirconate-based compound or a mixture thereof; and optionally
(g) one or more non-reinforcing fillers which non-reinforcing fillers may be hydrophobically treated.

2. A one-part RTV condensation curable silicone composition in accordance with claim 1 wherein in component (a) and component (b) each n is zero and each Z is an alkylene having from 2 to 10 carbons.

3. A one-part RTV condensation curable silicone composition in accordance with claim 1 wherein in component (b) at least 55% of the R⁸groups on the M units are silicon bonded X₃₋ₙRₙSi-Z- groups.

4. A one-part RTV condensation curable silicone composition in accordance with any preceding claim wherein component (e) the one or more silicon-containing adhesion promoters is selected from one or more mercaptopropyltrialkoxysilanes, an aminopropyltriethoxysilane, an aminopropyltrimethoxysilane or an amine of the structure:
R¹⁰ₖ (R¹¹O)₃₋ₖSi-Z¹-N(H)- (CH₂)ₘ -NH₂
in which R¹⁰ is an alkyl group containing from 1 to 10 carbon atoms; each R¹¹ may be the same or different and is H or R¹⁰, Z¹ is a linear or branched alkylene group having from 2 to 10 carbon atoms, m is from 2 to 10 and k is zero or 1.

5. A one-part RTV condensation curable silicone composition in accordance with any preceding claim wherein component (d) the reinforcing filler is precipitated calcium carbonate and component (g) is ground calcium carbonate and the total amount of precipitated calcium carbonate +and ground calcium carbonate is from 30 to 60 wt. % of the composition.

6. A one-part RTV condensation curable silicone composition in accordance with any preceding claim wherein component (c) comprises one or more cross-linkers comprising a silicon containing compound of the formula R⁹_{4-f}SiX'_{f} and oligomeric reaction products thereof in which R⁹ is selected from the group consisting of hydrocarbon radicals having 1 to 6 carbon atoms;
X' in the above formula is a hydrolyzable group; and
subscript f is 2, 3 or 4, or subscript f is 3 or 4.

7. A one-part RTV condensation curable silicone composition in accordance with any preceding claim wherein hydrolysable groups X' in component (c) is an alkoxy group having 1 to 6 carbon atoms.

8. A one-part RTV condensation curable silicone composition in accordance with any one of claims 1 to 5 wherein component (c) comprises a dipodal molecule having at least two or at least 3 alkoxysilyl terminal groups.

9. An elastomeric sealant material which is the cured product of the composition in accordance with any one of claims 1 to 8.

10. An elastomeric sealant material obtained or obtainable by
(i) mixing together a one-part RTV condensation curable silicone composition in accordance with any one of claims 1 to 8 and
(ii) curing the said composition.

11. An elastomeric sealant material in accordance with claim 9 or 10 which provides a tension strength retention rate, and shear strength retention rate of greater than 75% at 80°C measured in accordance with 6.1.4.1.2 of EOTA-ETAG 002 of November 2005 whilst maintaining a tear strength retention rate of above 75% measured in accordance with 6.1.4.6.4 of EOTA-ETAG 002 of November 2005.

12. A method of making an elastomeric sealant material by
(i) mixing together components (a) to (g) and any required additives of a one-part RTV condensation curable silicone composition in accordance with claim 1 to 5; and
(ii) curing the said composition.

13. A method of making an elastomeric sealant material in accordance with claim 12 wherein one-part RTV condensation curable silicone composition is applied onto one or more substrates before cure selected from glass, metal, stone, marble, brick, concrete, cement and other cementitious substrates and/or combinations thereof,

14. A use of a one-part RTV condensation curable silicone composition in accordance with any one of claims 1 to 8in the preparation of an elastomeric sealant material which provides a tension strength retention rate, and shear strength retention rate of greater than 75% at 80°C measured in accordance with 6.1.4.1.2 of EOTA-ETAG 002 of November 2005 whilst maintaining a tear strength retention rate of above 75% at room temperature measured in accordance with 6.1.4.6.4 of EOTA-ETAG 002 of November 2005.

15. Use of a one-part RTV condensation curable silicone composition in accordance with any one of claims 1 to 8 as a silicone sealant composition in silicone structural glazing (SSG) applications.

## Patentansprüche

1. Einkomponentige RTV-kondensationshärtbare Siliconzusammensetzung, umfassend die folgenden Komponenten:
(a) ein Organopolysiloxanpolymer der Formel
X₃₋ₙRₙSi-Z- (R¹_{y}SiO_{(4-y)/2})_{z}-SiR¹₂ -Z-Si-RₙX₃₋ₙ
in der jedes X unabhängig eine Alkoxy-Gruppe ist, jedes R eine Alkyl-, Alkenyl- oder Arylgruppe ist, jedes R¹ eine X-Gruppe, Alkylgruppe, Alkenylgruppe oder Arylgruppe ist und Z eine zweiwertige organische Gruppe ist;
n 0 oder 1 ist, y 0, 1 oder 2, vorzugsweise 2 ist und z eine ganze Zahl derart ist, dass das Organopolysiloxanpolymer eine Viskosität, wie in der Beschreibung gemäß ASTM D4287 offenbart bestimmt, von 10.000 bis 150.000 mPa.s bei 25 °C, in einer Menge von 30 bis 80 Gew.-% der Zusammensetzung aufweist;
(b) ein alkoxyliertes MQ-Siliconharz optional in der Gegenwart eines Polysiloxanträgerfluid, das ein Molverhältnis von M-Einheiten zu Q-Einheiten von 0,1 : 1,0 bis 1,0 zu 1,0 aufweist; wobei jede Q-Typ-Siloxaneinheit die Struktur SiO_{4/2} aufweist und die M-Typ-Siloxaneinheiten entweder die Struktur R²₂ R⁸SiO_{1/2}-aufweisen oder in Form einer Mischung aus R²₂ R⁸SiO_{1/2}- und R²₃SiO_{1/2}-Gruppen vorliegen;
wobei jede R²-Gruppe eine Alkylgruppe ist, die 1 bis 6 Kohlenstoffe aufweist; und R⁸ eine Alkenylgruppe ist, die von 2 bis 6 Kohlenstoffe aufweist; oder R⁸ eine X₃-ₙRₙSi-Z-Gruppe ist, wobei X, R, Z und n alle wie zuvor definiert sind;
wobei mindestens 50 % der R⁸-Gruppen Silicium-bindende X₃₋ₙRₙSi-Z-Gruppen sind;
wobei Komponente (b) in der Zusammensetzung in einer Menge von 7,5 bis 25 Gew.-% vorhanden ist;
(c) einen oder mehrere Vernetzer in Form einer Silicium-enthaltenden Verbindung, die mindestens zwei, alternativ mindestens drei hydrolysierbare Gruppen pro Molekül aufweist;
(d) einen oder mehrere Verstärkungsfüllstoffe, die aus gefällter Kieselsäure, pyrogener Kieselsäure oder gefälltem Calciumcarbonat ausgewählt ist, wobei die Verstärkungsfüllstoffe optional hydrophob behandelt sind;
(e) einen oder mehrere Silicium-enthaltende Haftvermittler;
(f) einen oder mehrere Kondensationshärtungskatalysatoren, die aus einem Katalysator, umfassend eine Titanat-basierte Verbindung, eine Zirconat-basierte Verbindung oder eine Mischung davon ausgewählt sind; und optional
(g) einen oder mehrere Nichtverstärkungsfüllstoffe, wobei die Nichtverstärkungsfüllstoffe behandelt sein können.

2. Einkomponentige RTV-kondensationshärtbare Siliconzusammensetzung nach Anspruch 1, wobei in Komponente (a) und Komponente (b) jedes n null ist und jedes Z ein Alkylen ist, das 2 bis 10 Kohlenstoffe aufweist.

3. Einkomponentige RTV-kondensationshärtbare Siliconzusammensetzung nach Anspruch 1, wobei in Komponente (b) mindestens 55 % der R⁸-Gruppen an den M-Einheiten Silicon-gebundene X₃₋ₙRₙSi-Z-Gruppen sind.

4. Einkomponentige RTV-kondensationshärtbare Siliconzusammensetzung nach einem der vorstehenden Ansprüche, wobei Komponente (e) der eine oder die mehreren Silicium-enthaltenden Haftvermittler aus einem oder mehreren Mercaptopropyltrialkoxysilanen, einem Aminopropyltriethoxysilan, einem Aminopropyltrimethoxysilan oder einem Amin der Struktur ausgewählt ist:
R¹⁰ₖ (R¹¹O)₃₋ₖSi-Z¹-N(H)- (CH₂)ₘ -NH₂
in der R¹⁰ eine Alkylgruppe ist, die von 1 bis 10 Kohlenstoffatomen enthält; jedes R¹¹ gleich oder unterschiedlich sein kann und H oder R¹⁰ ist, Z¹ eine lineare oder verzweigte Alkylengruppe ist, die 2 bis 10 Kohlenstoffatome aufweist, m 2 bis 10 ist und k null oder 1 ist.

5. Einteilige RTV-kondensationshärtbare Siliconzusammensetzung nach einem der vorstehenden Ansprüche, wobei Komponente (d) der Verstärkungsfüllstoff gefälltes Calciumcarbonat ist und Komponente (g) gemahlenes Calciumcarbonat ist und die Gesamtmenge an gefälltem Calciumcarbonat und gemahlenem Calciumcarbonat von 30 bis 60 Gew.-% der Zusammensetzung beträgt.

6. Einkomponentige RTV-kondensationshärtbare Siliconzusammensetzung nach einem der vorstehenden Ansprüche, wobei Komponente (c) einen oder mehrere Vernetzer umfasst, umfassend eine Silicium-enthaltende Verbindung der Formel R⁹₄-fSiX'f und oligomere Reaktionsprodukte davon, wobei R⁹ aus der Gruppe ausgewählt ist, bestehend aus Kohlenwasserstoffradikalen, die 1 bis 6 Kohlenstoffatome aufweisen;
X' in der obigen Formel eine hydrolysierbare Gruppe ist; und
Index f 2, 3 oder 4 ist, oder Index f 3 oder 4 ist.

7. Einkomponentige RTV-kondensationshärtbare Siliconzusammensetzung nach einem der vorstehenden Ansprüche, wobei hydrolysierbare Gruppen X' in Komponente (c) eine Alkoxygruppe ist, die 1 bis 6 Kohlenstoffatome aufweist.

8. Einkomponentige RTV-kondensationshärtbare Siliconzusammensetzung nach einem der Ansprüche 1 bis 5, wobei Komponente (c) ein dipodales Molekül umfasst, das mindestens zwei oder mindestens 3 Alkoxysilylendgruppen aufweist.

9. Elastomeres Dichtungsmaterial, das das gehärtete Produkt der Zusammensetzung nach einem der Ansprüche 1 bis 8 ist.

10. Elastomeres Dichtungsmaterial, das erhalten wird oder erhältlich ist durch
(i) Zusammenmischen einer einteiligen RTV-kondensationshärtbaren Siliconzusammensetzung nach einem der Ansprüche 1 bis 8 und
(ii) Aushärten der Zusammensetzung.

11. Elastomeres Dichtungsmaterial nach Anspruch 9 oder 10, das eine Zugfestigkeitsbeibehaltungsrate und Scherfestigkeitsbeibehaltungsrate von mehr als 75 % bei 80 °C, gemessen gemäß 6.1.4.1.2 der EOTA-ETAG 002 vom November 2005, bereitstellt, während eine Reißfestigkeitsbeibehaltungsrate von über 75 %, gemessen gemäß 6.1.4.6.4 der EOTA-ETAG 002 vom November 2005, beibehalten wird.

12. Verfahren zum Herstellen eines elastomeren Dichtungsmaterials durch
(i) Zusammenmischen der Komponenten (a) bis (g) und beliebiger erforderlicher Additive einer einteiligen RTV-kondensationshärtbaren Siliconzusammensetzung nach Anspruch 1 bis 5; und
(ii) Aushärten der Zusammensetzung.

13. Verfahren zum Herstellen eines elastomeren Dichtungsmaterials nach Anspruch 12, wobei eine einkomponentige RTV-kondensationshärtbare Siliconzusammensetzung vor einer Härtung auf ein oder mehrere Substrate aufgebracht wird, die aus Glas, Metall, Stein, Marmor, Ziegel, Beton, Zement und anderen zementartigen Substraten und/oder Kombinationen davon ausgewählt sind,

14. Verwendung einer einkomponentigen RTV-kondensationshärtbaren Siliconzusammensetzung nach einem der Ansprüche 1 bis 8 bei der Herstellung eines elastomeren Dichtungsmaterials, das eine Zugfestigkeitsbeibehaltungsrate und Scherfestigkeitsbeibehaltungsrate von mehr als 75 % bei 80 °C, gemessen gemäß 6.1.4.1.2 der EOTA-ETAG 002 vom November 2005, bereitstellt, während eine Reißfestigkeitsbeibehaltungsrate von über 75 % bei Raumtemperatur, gemessen gemäß 6.1.4.6.4 der EOTA-ETAG 002 vom November 2005, aufrechterhalten wird.

15. Verwendung einer einteiligen RTV-kondensationshärtbaren Siliconzusammensetzung nach einem der Ansprüche 1 bis 8 als eine Silicondichtungsmaterialzusammensetzung in Siliconstrukturverglasungsanwendungen (SSG-Anwendungen).

## Revendications

1. Composition de silicone durcissable par condensation RTV en une partie comprenant les composants suivants :
(a) un polymère organopolysiloxane de la formule
X₃₋ₙRₙSi-Z-(R¹_{y}SiO_{(4-y)/2})_{z}-SiR¹₂-Z-Si-RₙX₃₋ₙ
dans laquelle chaque X est indépendamment un groupe alcoxy, chaque R est un groupe alkyle, alcényle ou aryle, chaque R¹ est un groupe X, un groupe alkyle, un groupe alcényle ou un groupe aryle et Z est un groupe organique divalent ;
n vaut 0 ou 1, y vaut 0, 1 ou 2, de préférence 2 et z est un nombre entier de telle sorte que ledit polymère organopolysiloxane a une viscosité, déterminée comme indiqué dans la description selon la norme ASTM D4287, allant de 10 000 à 150 000 mPa.s à 25 °C, en une quantité allant de 30 à 80 % en poids de la composition ;
(b) une résine de silicone MQ alcoxylée, facultativement en présence d'un fluide porteur de polysiloxane ayant un rapport molaire entre unités M et unités Q allant de 0,1: 1,0 à 1,0 pour 1,0 ; dans laquelle chaque motif siloxane de type Q a la structure SiO_{4/2} et les motifs siloxane de type M ont la structure R²₂R⁸SiO_{1/2}- ou sont présents sous la forme d'un mélange de groupes R²₂R⁸SiO_{1/2}- et R²₃SiO_{1/2}- ;
où chaque groupe R² est un groupe alkyle ayant de 1 à 6 carbones ; et R⁸ est un groupe alcényle ayant de 2 à 6 carbones ; ou R⁸ est un groupe X₃-ₙRₙSi-Z-, X, R, Z et n étant tous tels que définis précédemment ;
dans laquelle au moins 50 % des groupes R⁸ sont des groupes X₃₋ₙRₙSi-Z- liés à du silicium ;
lequel le composant (b) est présent dans la composition en une quantité allant de 7,5 à 25 % en poids ;
(c) un ou plusieurs agents de réticulation sous la forme d'un composé contenant du silicium ayant au moins deux, alternativement ou au moins trois groupes hydrolysables par molécule ;
(d) une ou plusieurs charges de renforcement choisies parmi silice précipitée, silice pyrogénée ou carbonate de calcium précipité, lesquelles charges de renforcement sont facultativement soumises à un traitement hydrophobe ;
(e) un ou plusieurs promoteurs d'adhésion contenant du silicium ;
(f) un ou plusieurs catalyseurs de durcissement par condensation choisis parmi un catalyseur comprenant un composé à base de titanate, un composé à base de zirconate ou un mélange de ceux-ci ; et facultativement
(g) une ou plusieurs charges non de renforcement, lesquelles charges non de renforcement peuvent être soumises à un traitement hydrophobe.

2. Composition de silicone durcissable par condensation RTV en une partie selon la revendication 1, dans laquelle, dans le composant (a) et le composant (b), chaque n vaut zéro et chaque Z est un alkylène ayant de 2 à 10 carbones.

3. Composition de silicone durcissable par condensation RTV en une partie selon la revendication 1, dans laquelle, dans le composant (b), au moins 55 % des groupes R⁸sur les motifs M sont des groupes X₃₋ₙRₙSi-Z- liés à du silicium.

4. Composition de silicone durcissable par condensation RTV en une partie selon l'une quelconque revendication précédente, dans laquelle le composant (e), le ou les promoteurs d'adhésion contenant du silicium, sont choisis parmi un ou plusieurs mercaptopropyltrialcoxysilanes, un aminopropyltriéthoxysilane, un aminopropyltriméthoxysilane ou une amine de la structure :
R¹⁰ₖ(R¹¹O)₃₋ₖSi-Z¹-N(H)-(CH₂)ₘ-NH₂
dans laquelle R¹⁰ est un groupe alkyle ayant de 1 à 10 atomes de carbone ; chaque R¹¹ peut être identique ou différent et est H ou R¹⁰, Z¹ est un groupe alkylène linéaire ou ramifié ayant de 2 à 10 atomes de carbone, m va de 2 à 10 et k vaut zéro ou 1.

5. Composition de silicone durcissable par condensation RTV en une partie selon l'une quelconque revendication précédente, dans laquelle le composant (d), la charge de renforcement, est du carbonate de calcium précipité et le composant (g) est du carbonate de calcium broyé et la quantité totale de carbonate de calcium précipité + carbonate de calcium broyé va de 30 à 60 % en poids de la composition.

6. Composition de silicone durcissable par condensation RTV en une partie selon l'une quelconque revendication précédente, dans laquelle le composant (c) comprend un ou plusieurs agents de réticulation comprenant un composé contenant du silicium de la formule R⁹_{4-f}SiX'_{f} et des produits de réaction oligomères de celui-ci, dans laquelle R⁹ est choisi dans le groupe constitué de radicaux hydrocarbonés ayant 1 à 6 atomes de carbone ;
X' dans la formule ci-dessus est un groupe hydrolysable ; et
l'indice f vaut 2, 3 ou 4, ou l'indice f vaut 3 ou 4.

7. Composition de silicone durcissable par condensation RTV en une partie selon l'une quelconque revendication précédente, dans laquelle les groupes hydrolysables X' dans le composant (c) est un groupe alcoxy ayant 1 à 6 atomes de carbone.

8. Composition de silicone durcissable par condensation RTV en une partie selon l'une quelconque des revendications 1 à 5, dans laquelle le composant (c) comprend une molécule dipodale ayant au moins deux ou au moins 3 groupes terminaux alcoxysilyle.

9. Matériau d'étanchéité élastomère qui est le produit durci de la composition selon l'une quelconque des revendications 1 à 8.

10. Matériau d'étanchéité élastomère obtenu ou pouvant être obtenu par
(i) mélange d'une composition de silicone durcissable par condensation RTV en une partie selon l'une quelconque des revendications 1 à 8 et
(ii) durcissement de ladite composition.

11. Matériau d'étanchéité élastomère selon la revendication 9 ou 10 qui fournit un taux de rétention de résistance à la traction, et un taux de rétention de résistance au cisaillement supérieur à 75 % à 80 °C, mesuré conformément au paragraphe 6.1.4.1.2 de l'ETAG 002 de l'EOTA de novembre 2005, tout en maintenant un taux de rétention de résistance à la déchirure supérieur à 75 %, mesuré conformément au paragraphe 6.1.4.6.4 de l'ETAG 002 de l'EOTA de novembre 2005.

12. Procédé de préparation d'un matériau d'étanchéité élastomère par
(i) mélange des composants (a) à (g) et de tous additifs requis d'une composition de silicone durcissable par condensation RTV en une partie selon les revendications 1 à 5 ; et
(ii) durcissement de ladite composition.

13. Procédé de préparation d'un matériau d'étanchéité élastomère selon la revendication 12, dans lequel une composition de silicone durcissable par condensation RTV en une partie est appliquée sur un ou plusieurs substrats avant durcissement, choisis parmi verre, métal, pierre, marbre, brique, béton, ciment et autres substrats cimentaires et/ou combinaisons de ceux-ci,

14. Utilisation d'une composition de silicone durcissable par condensation RTV en une partie selon l'une quelconque des revendications 1 à 8 dans la préparation d'un matériau d'étanchéité élastomère qui fournit un taux de rétention de résistance à la traction, et un taux de rétention de résistance au cisaillement supérieur à 75 % à 80 °C, mesuré conformément au paragraphe 6.1.4.1.2 de l'ETAG 002 de l'EOTA de novembre 2005, tout en maintenant un taux de rétention de résistance à la déchirure supérieur à 75 % à température ambiante mesuré conformément au paragraphe 6.1.4.6.4 de l'ETAG 002 de l'EOTA de novembre 2005.

15. Utilisation d'une composition de silicone durcissable par condensation RTV en une partie selon l'une quelconque des revendications 1 à 8 en tant que composition d'étanchéité de silicone dans des applications de vitrage structurel en silicone (SSG).
